# EUROPÄISCHE PATENTSCHRIFT

(11) **EP 1 115 591 B1**
(45) Veröffentlichungstag und Bekanntmachung des Hinweises auf die Patenterteilung: **02.05.2003**
(21) Anmeldenummer: 00956081.4
(22) Anmeldetag: 19.07.2000
(51) Int. Cl.: B60K 25/00, F02N 7/10, B60K 6/04, F02B 73/00

(54) **ANTRIEBSSYSTEM FÜR KRAFTFAHRZEUGE**
DRIVE SYSTEM FOR MOTOR VEHICLES
SYSTEME D'ENTRAINEMENT POUR VEHICULES AUTOMOBILES

(30) Priorität: 27.07.1999 DE 19934790
(43) Veröffentlichungstag der Anmeldung: 18.07.2001
(73) Patentinhaber: ROBERT BOSCH GMBH, 70442 Stuttgart (DE)
(72) Erfinder: AHNER, Peter, D-71032 Boeblingen (DE); ACKERMANN, Manfred, D-71570 Oppenweiler (DE)
(86) Internationale Anmeldenummer: DE0002347
(87) Internationale Veröffentlichungsnummer: WO01007280

(56) Entgegenhaltungen:
- DE-A- 3 522 988
- DE-A- 19 705 610
- DE-A- 19 750 497
- DE-A- 19 953 940

## Beschreibung

Die Erfindung betrifft ein Antriebssystem für Kraftfahrzeuge mit den im Patentanspruch 1 genannten Merkmalen.

### Stand der Technik

Bei den weitaus meisten Kraftfahrzeugen ist in deren Antriebssystem als Hauptantrieb eine Brennkraftmaschine vorgesehen, die über eine Fahrkupplung und ein Fahrzeuggetriebe mit einer oder mehreren Antriebsachsen im Hauptantriebsstrang gekoppelt ist. Ferner werden in Kraftfahrzeugen in zunehmendem Maße Nebenaggregate wie Pumpen, Kompressoren, Klimaanlagen sowie elektrische Verbraucher wie beispielsweise Stellantriebe verwendet, welche über einen Nebenantriebsstrang betrieben werden, der mit dem Hauptantriebsstrang des Kraftfahrzeugs gekoppelt ist.

Ferner ist es bekannt, zur Verringerung der Umweltbelastung Hybridantriebe in Kraftfahrzeugen zu verwenden, wobei das Antriebssystem sowohl eine Brennkraftmaschine als auch eine elektrische Maschine für den wahlweisen Antrieb des Kraftfahrzeuges aufweist. Auch dort liegen Brennkraftmaschine und elektrische Maschine im Hauptantriebsstrang des Kraftfahrzeuges, wobei lediglich die Brennkraftmaschine zum Antrieb der Nebenaggregate verwendet wird.

Aus der DE 197 50 497 A1 ist ferner bekannt, die Nebenaggregate im Kraftfahrzeug über ein Zwischengetriebe mit dem Hauptantrieb des Kraftfahrzeuges zu betreiben, wobei die Nebenaggregate auch eine elektrische Maschine als Starter-Generator aufweisen, welche einerseits zum Starten der Brennkraftmaschine im Hauptantriebsstrang als elektrischer Motor und andererseits zur Versorgung des Kraftfahrzeug-Bordnetzes zum Laden einer Akkumulatorbatterie im Generatorbetrieb arbeitet.

Derartige Fahrzeugkonzepte, die insbesondere hinsichtlich des Kraftstoffverbrauchs optimiert werden, erfordern unter anderem ein Abschalten der Brennkraftmaschine im Hauptantriebsstrang beim Stehen des Fahrzeugs an Ampeln, d.h. einen Start-Stop-Betrieb sowie ein Abschalten oder Auskuppeln der Brennkraftmaschine in Schubphasen, d.h. im Schwung-Nutz-Betrieb. Dies bedeutet gegenüber herkömmlichen Fahrzeugen eine etwa 10-fache Startzyklenzahl von 400.000 bis 600.000 Startzyklen. Die zusätzlichen Startzyklen sind im wesentlichen Wiederholstarts, d.h. Starts bei betriebswarmer Brennkraftmaschine. Für diese Wiederholstarts wird ein besonders schneller und geräuscharmer Start verlangt. Andererseits wird bei diesen Kraftfahrzeugen aus Komfortgründen gegenüber herkömmlichen Fahrzeugen eine bis zu 5-fach höhere Generatorleistung gefordert, zumal elektrisch angesteuerte und betriebene Nebenaggregate verbrauchsgünstiger arbeiten. Hier werden Generatorleistungen von mehr als 5kW gewünscht. Zu dem wird diese Leistung teilweise bereits im Leerlauf der Brennkraftmaschine, d.h. für Kurbelwellendrehzahlen von kleiner 700 U/min. gefordert, was mit den heute üblichen Klauenpolgeneratoren nicht realisierbar ist.

Um die Startanforderungen und die Leistungsanforderungen im Generatorbetrieb mit einem sog. Starter-Generator erfüllen zu können, ist es aus der DE 197 05 610 A1 bekannt, zur Reduzierung der Startleistung einen sog. Impulsstart anzuwenden und für extrem niedrige Starttemperaturen weiterhin einen konventionellen, zusätzlichen Starter einzusetzen.

Hinsichtlich der Ladebilanz sind jedoch Konzepte mit einem Starter-Generator zum Starten der Brennkraftmaschine im Hauptantriebsstrang im Kaltstart- sowie im Start-Stop-Betrieb äußerst kritisch, zumal bei hoher elektrischer Bordnetzleistung nicht voraussehbar ist, welche Fahr- und Verbrauchszyklen bewältigt werden müssen. Noch ungünstiger ist die Situation bei der Forderung nach einer Klimaanlage bei stehendem Fahrzeug, da der konventionelle Klimakompressor aus der Akkumulatorbatterie des Kraftfahrzeugs betrieben werden müßte. Dies erfordert eine kostenintensive Bauart mit hoher Kapazität und Leistungsfähigkeit, was wieder zu einer tendenziellen Erhöhung des Kraftstoffverbrauches führt.

Ferner ist in der älteren Anmeldung DE 198 529 41.4 bereits vorgeschlagen, die Nebenaggregate durch einen zusätzlichen Nebenaggregateantrieb, ausgeführt als kleinere Brennkraftmaschine, anzutreiben, wobei diese Nebenaggregate auch einen Starter-Generator mit enthalten, der im Generatorbetrieb einerseits zur Versorgung des Kraftfahrzeugbordnetzes, und andererseits im Motorbetrieb zum Starten des Nebenaggregateantriebs verwendet wird. Der Hauptantrieb wird dabei über eine Kupplung vom Nebenaggregateantrieb gestartet und sodann wieder vom Nebenaggregateantrieb abgekoppelt.

Mit der Erfindung wird angestrebt, das Antriebssystem für Kraftfahrzeuge im Hinblick auf den jeweiligen Fahrleistungsbedarf einerseits und den Leistungsbedarf zum Antrieb der Nebenaggregate andererseits zu optimieren.

### Vorteile der Erfindung

Das erfindungsgemäße Antriebssystem für Kraftfahrzeuge mit den im Kennzeichnungsteil des Patentanspruchs 1 genannten Merkmalen hat den Vorteil, daß mit dem Hauptantrieb, dem Nebenaggregateantrieb und dem Starter-Generator drei Komponenten zur Optimierung der Leistungsbilanz im Kraftfahrzeug, insbesondere zur Optimierung des Kraftstoffverbrauchs sowohl einzeln als auch in Kombination sowohl für den Fahrantrieb des Kraftfahrzeuges als auch zur Versorgung der Nebenaggregate einsetzbar sind. Mit diesem Antriebskonzept ist ab einem mittleren Fahrleistungsbedarf insbesondere eine leistungsstarke Brennkraftmaschine im Hauptantriebsstrang und zum Antrieb der Nebenaggregate insbesondere eine Brennkraftmaschine kleinerer Leistung einzusetzen. Dieser Nebenaggregateantrieb dient ferner zum Start der Brennkraftmaschine im Hauptantriebsstrang oder als Fahrantrieb bei niedrigem Leistungsbedarf sowie zur Unterstützung der Brennkraftmaschine im Hauptantriebsstrang bei sehr hohem Fahrleistungsbedarf (Kick Down). Mit der erfindungsgemäßen Lösung können sowohl Komfortanforderungen wie Standklimaanlagen, schneller geräuscharmer Start und hohe elektrische Bordnetzleistung, als auch ein stark reduzierter Kraftstoffverbrauch durch die Auswahl der optimalen Betriebsart wesentlich kostengünstiger als bei Kraftfahrzeugen mit Hybridantrieben realisiert werden. Das erfindungsgemäße Antriebssystem erlaubt immer ein flexibles Antriebs- und Bordnetzmanagement, so daß einerseits die Akkumulatorbatterie des Kraftfahrzeugs als elektrischer Energiespeicher relativ klein dimensioniert werden und andererseits immer die vom Wirkungsgrad und von den Abgasemissionen günstigste Kombination der drei Antriebe ausgewählt werden kann.

Fahrzeuge mit dem erfindungsgemäßen Antriebssystem haben eine erhöhte Betriebszuverlässigkeit und einen erhöhten Komfort. Bei Ausfall des Hauptantriebes bleibt die Mobilität des Fahrzeuges durch den Nebenaggregateantrieb - wenn auch in eingeschränktem Umfang - erhalten.

Vorteilhafte Weiterbildungen und Ausgestaltungen der Erfindung ergeben sich aus den übrigen, in den Unteransprüchen genannten Merkmalen.

Um das Mitschleppen von abgeschalteten Antrieben zu vermeiden, ist in vorteilhafter Weise bei abgeschaltetem Hauptantrieb bzw. Nebenaggregateantrieb dieser abgeschaltete Antrieb vom jeweils eingeschalteten Antrieb des Kraftfahrzeuges abkoppelbar.

So ist es im Hinblick auf die Abstufung der Leistung der drei Antriebe besonders vorteilhaft, wenn der Nebenaggregateantrieb eine weitere Brennkraftmaschine ist, deren Leistung kleiner als die Hälfte der Leistung der Brennkraftmaschine im Hauptantriebsstrang ist.

Bei dieser Abstufung ist in vorteilhafter Weise zum Starten des Nebenaggregateantriebs dieser über eine Schaltkupplung mit dem Starter-Generator zu koppeln. Desweiteren ist in zweckmäßiger Weise zum Starten des Hauptantriebs dieser mit dem laufenden Nebenaggregateantrieb zu koppeln.

Eine kostengünstige Ausführung ergibt sich, indem der Nebenaggregateantrieb und der Starter-Generator über ein Zwischengetriebe mit dem Hauptantriebsstrang verbunden ist. Eine optimale Krafteinkopplung vom Starter-Generator zum Starten des Nebenaggregateantriebs über die Schaltkupplung ergibt sich, indem das Zwischengetriebe eingangsseitig mit dem Starter-Generator verbunden ist und ausgangsseitig sowohl über die Fahrkupplung vom Fahrzeuggetriebe als auch über eine Hilfskupplung von der Brennkraftmaschine im Hauptantriebsstrang abkoppelbar ist.

Mittels einer Temperaturerfassung am Nebenaggregateantrieb ist dessen Startvorgang temperaturabhängig zwischen einem Direktstart und einem Impulsstart umsteuerbar. Zum Direktstart des Nebenaggregateantriebs ist die Fahrkupplung und die Hilfskupplung im Hauptantriebsstrang geöffnet und die Schaltkupplung im Nebenantriebsstrang ist geschlossen. Zum Impulsstart des Nebenaggregateantriebs ist die Fahrkupplung und die Hilfskupplung im Hauptantriebsstrang geöffnet und die Schaltkupplung im Nebenantriebsstrang ist erst nach dem Hochlaufen des Starter-Generators schlagartig zu schließen.

Auch der Startvorgang für die Brennkraftmaschine im Hauptantriebsstrang des Kraftfahrzeugs ist mittels einer Temperaturerfassung temperaturabhängig zwischen einem Direktstart und einem Impulsstart umsteuerbar, wobei dieser Startvorgang auch noch temperaturabhängig wahlweise durch den Starter-Generator und/oder durch den Nebenaggregateantrieb erfolgt. Zum Direktstart des Hauptantriebs bei laufendem Nebenaggregateantrieb ist die Fahrkupplung geöffnet und die Hilfskupplung sowie die Schaltkupplung sind geschlossen. Zum Impulsstart des Hauptantriebs bei laufendem Nebenaggregateantrieb ist die Fahrkupplung offen, die Schaltkupplung ist geschlossen und die Hilfskupplung wird erst nach einem Hochlaufen des Zwischengetriebes schlagartig geschlossen.

### Zeichnung

Weitere Einzelheiten der Erfindung sind in dem nachfolgend beschriebenen Ausführungsbeispiel anhand der zugehörigen Zeichnung näher erläutert.

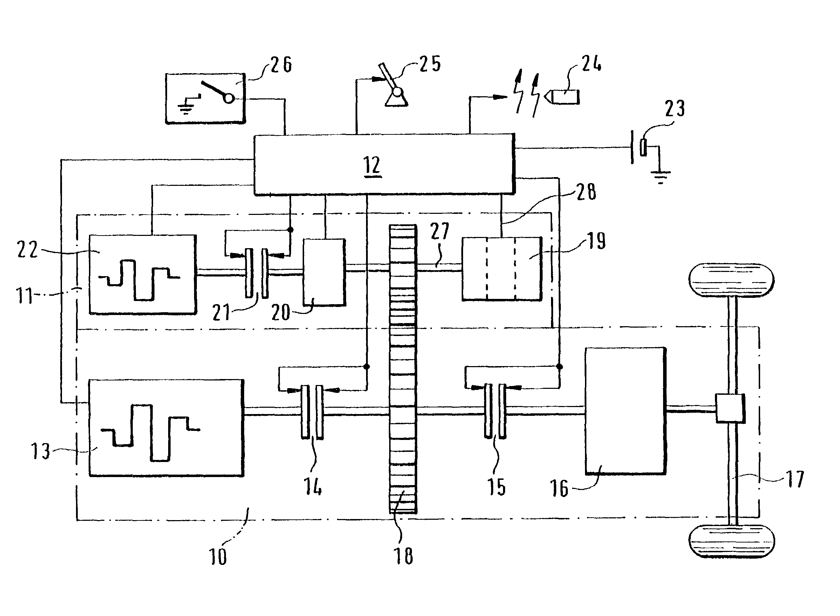

Die Figur zeigt in schematischer Darstellung ein erfindungsgemäßes Antriebssystem für Kraftfahrzeuge mit einer Brennkraftmaschine im Hauptantriebsstrang, und einem Starter-Generator sowie einem Nebenaggregateantrieb im Nebenantriebsstrang.

### Beschreibung des Ausführungsbeispiels

Aus der Figur ist ein Antriebssystem für Kraftfahrzeuge erkennbar, welches aus einem Hauptantriebsstrang 10 und einem Nebenantriebsstrang 11 sowie einer gemeinsamen elektrischen Steuerung und Versorgung 12 im Bordnetz des Kraftfahrzeuges besteht. Der Hauptantriebsstrang enthält eine Brennkraftmaschine 13 als Hauptantrieb, eine Hilfskupplung 14 am Abtrieb der Brennkraftmaschine 13, eine Fahrkupplung 15 und ein nachgeordnetes, herkömmliches Fahrzeuggetriebe 16, dessen Ausgangswelle mit einer Antriebsachse 17 des Kraftfahrzeugs fest verbunden ist. Zwischen der Fahrkupplung 15 und der Hilfskupplung 14 im Hauptantriebsstrang 10 befindet sich ein Zwischengetriebe 18, welches den Hauptantriebsstrang 10 mit dem Nebenantriebsstrang 11 verbindet. Im Nebenantriebsstrang 11 befinden sich, sofern nicht elektrisch angetrieben, mindestens ein anzutreibendes und gegebenenfalls auch bei abgeschaltetem Hauptantrieb oder stehendem Fahrzeug arbeitendes Nebenaggregat 19, wie beispielsweise eine Kühlwasserpumpe, eine Ölpumpe für den Schmiermittelkreislauf des Kraftfahrzeugs, eine Punmpe für die Servolenkung sowie ein Kompressor für eine Klimaanlage. Diese Nebenaggregate 19, sowie der Starter-Generator 20 und der Nebenaggregateantrieb 22 können zur besseren Drehzahlanpassung an ihren optimalen Betriebsbereich oder aus Bauraumgründen mittels Übersetzungsgetriebe mit dem Nebenantriebsstrang 11 verbunden sein. Auch das Zwischengetriebe 18 kann zu diesem Zweck mit einer Übersetzung versehen sein. Sind die Nebenaggregate 19 elektrisch angetrieben, entfällt die mechanische Kopplung 27. Die Nebenaggregate erhalten dann ihre Energiezufuhr über die elektrische Verbindung 28. Ferner befindet sich im Nebenantriebsstrang 11 ein mit dem Zwischengetriebe 18 fest verbundener Starter-Generator 20, an dem über eine Schaltkupplung 21 ein Nebenaggregateantrieb 22 gekoppelt ist. Als Nebenaggregateantrieb 22 dient hier eine weitere Brennkraftmaschine, deren Leistung kleiner als die Hälfte der Leistung der Brennkraftmaschine 13 im Hauptantriebsstrang 10 ist. Die elektrische Steuerung und Versorgung 12 ist über elektrische Leitungen unter anderem mit der Hilfskupplung 14, der Fahrkupplung 15, der Schaltkupplung 21, mit dem Starter-Generator 20 und zum Teil mit den Nebenaggregaten 19 verbunden. Sie ist ferner zur Temperaturerfassung mit der Brennkraftmaschine 13 und dem Nebenaggregateantrieb 22 verbunden. Desweiteren ist an der elektrischen Steuerung und Versorgung 12 im Bordnetz des Kraftfahrzeuges eine Akkumulatorbatterie 23 als elektrischer Energiespeicher, eine Fernbedienung 24, ein Gaspedalsensor 25 sowie ein Türkontakt 26 in der Fahrertür des Kraftfahrzeuges angeschlossen.

Nachfolgend wird nunmehr die Arbeitsweise des erfindungsgemäßen Antriebssystems näher beschrieben. Durch die Ansteuerung der drei vorerwähnten Kupplungen 14 und 15 ist das Zwischengetriebe 18 durch Öffnen der Fahrkupplung 15 und der Hilfskupplung 14 vollständig von der Brennkraftmaschine 13 als Hauptantrieb einerseits und von der Antriebsachse 17 andererseits entkoppelbar. So kann bei Stillstand des Fahrzeugs über den Nebenaggregateantrieb 22 und den Starter-Generator 20 bei geschlossener Schaltkupplung 21 sowohl Strom erzeugt als auch mechanische Leistung an den Nebenaggregaten 19 abgegeben werden. Dadurch wird eine flexible und verbrauchsoptimale Versorgung elektrischer und anderer Verbraucher erreicht. Im normalen Fahrbetrieb werden dagegen die Nebenaggregate 19 vom Hauptantriebsstrang mit der Brennkraftmaschine 13 angetrieben und der Starter-Generator 20 wird im Bedarfsfall im Generatorbetrieb zur Ladung der Akkumulatorbatterie 23 betrieben, siehe auch in der Tabelle, Fall 1.

Der Nebenantriebsstrang 11 wird dagegen im Niedriglastbereich des Kraftfahrzeuges zu dessen Antrieb verwendet, indem dann bei geschlossener Fahrkupplung 15 und geöffneter Hilfskupplung 14 die Brennkraftmaschine 13 abgeschaltet und die Antriebsleistung des Kraftfahrzeugs vom Nebenaggregateantrieb 22 bei geschlossener Schaltkupplung 21 aufgebracht wird, Tabelle, Fall 2. Dadurch können für einen genormten europäischen Fahrzyklus über 30% Kraftstoffverbrauchseinsparung gegenüber dem Betrieb mit der Brennkraftmaschine 13 im Hauptantriebsstrang 10 erreicht werden.

Durch Abschalten der Brennkraftmaschine 13 im Leerlauf bzw. Niedriglastbereich des Kraftfahrzeugs und bei entsprechenden Randbedingungen wie Ladekapazität der Akkumulatorbatterie 23 kann ebenfalls der Nebenaggregateantrieb 22 abgeschaltet werden, so daß bei offener Schaltkupplung 21 und offenen Kupplungen 14 und 15 lediglich der Starter-Generator 20 im Motorbetrieb den Antrieb der Nebenaggregate 19 übernehmen kann. Bei dieser Betriebsweise können bei Stillstand des Fahrzeugs Geräusche und Schwingungen des Fahrzeuges sowie Abgasemissionen deutlich gesenkt werden.

Bei rollendem Fahrzeug im Schubbetrieb werden je nach Leistungsbedarf im Kraftfahrzeugbordnetz und an den Nebenaggregaten 19 sowohl die Brennkraftmaschine 13 als auch der Nebenaggregateantrieb 22 ausgeschaltet und über die Kupplungen 14 bzw. 21 abgekuppelt. Dabei erfolgt weiterhin über die Fahrkupplung 15 und das Zwischengetriebe 18 der Antrieb der Nebenaggregate 19 und des Startergenerators 20 im Generatorbetrieb zur Ladung der Akkumulatorbatterie 23, Tabelle, Fall 4. Bei einem hohen elektrischen Leistungsbedarf oder bei nicht ausreichend geladener Akkumulatorbatterie 23 kann hier jedoch über die Schaltkupplung 21 der Nebenaggregateantrieb 22 noch zugeschaltet werden.

Soll bei stehendem Fahrzeug mit ausgeschalteter Brennkraftmaschine 13 eine Klimaanlage als eines der Nebenaggregate 19 betrieben werden, so wird ein mechanischer oder elektrischer Betrieb dadurch möglich, daß der Nebenaggregateantrieb 22 eingeschaltet ist, und über die geschlossene Schaltkupplung 21 entweder der Starter-Generator 20 generatorisch und über den Nebenantriebsstrang 11 die Klimaanlage mechanisch betrieben oder die Klimaanlage wird über die im Starter-Generator 20 erzeugte elektrisch Energie elektrisch getrieben. Die Fahr- und Hilfskupplung 15, 14 sind dabei offen, Tabelle, Fall 3. Gleiche Bedingungen für den Betrieb von Nebenaggregaten 19 liegen bei einem Stop des Fahrzeugs an einer Ampel oder ähnlichen Situationen vor, Tabelle, Fall 5. Für den Fall, daß die Nebenaggregate 19 nicht mechanisch angetrieben werden, wird keine mechanische Kopplung 27 benötigt. Stattdessen erfolgt die Energieversorgung über eine elektrische Verbindung 28.

Soll das Fahrzeug aus dem Stand heraus beschleunigt werden, vergleichbar ist eine Situation an einer Ampel, so ist es zur Geräusch- und Abgasverringung für die Umgebung der Ampel vorteilhaft, wenn der Starter-Generator 20 einen Teil der Antriebsleistung erbringt, da dieser dann ohne Geräusch und Abgase wirkt. Gleichzeitig sind beispielsweise Brennkraftmaschine 13 und Nebenaggregateantrieb 22 eingeschaltet und alle drei Antriebsaggregate über die Kupplung 14 und 21 miteinander bei zunächst offener Fahrkupplung 15 gekoppelt, Tabelle Fall 6, um dann über die geschlossene Fahrkupplung 15 das Fahrzeug zu bewegen.

Erfordert dagegen der Leistungsbedarf des Kraftfahrzeuges das Zuschalten der Brennkraftmaschine 13, so wird der Nebenaggregateantrieb 22 vorzugsweise immer dann abgeschaltet, wenn sich durch die Zusatzlast der Nebenaggregate 19 der Wirkungsgrad der Brennkraftmaschine 13 verbessert.

Die Brennkraftmaschine 13 und der Nebenaggregateantrieb 22 werden in enger Integration im Hinblick auf je einen gemeinsamen Öl- und Kühlwasserkreislauf und einen zusammengeführten Abgasstrang angeordnet, so daß eine Vorwärmung des Öls durch den Nebenaggregateantrieb 22 auch der später zugeschalteten Brennkraftmaschine 13 zugute kommt. Zur Verbesserung der Abgaszusammensetzung kann die an sich bekannte Lambda-Sonde für beide Antriebe genutzt werden, wobei diese auch im Start-Stop-Betrieb weiter auf ihrer optimalen Betriebstemperatur gehalten wird.

Bei dem hier beschriebenen Ausführungsbeispiel soll die Brennkraftmaschine 13 eine maximale Leistung von 150 kW aufweisen. Der Nebenaggregateantrieb 22 ist dagegen für eine kleinere maximale Leistung von 12 kW ausgelegt. Der Starter-Generator 20 hat im Motorbetrieb eine maximale Leistungsabgabe von 3 kW. Daraus ergibt sich für die Brennkraftmaschine 13 und den Nebenaggregateantrieb 22 eine entsprechend dem Leistungsgefälle vergleichbare Abstufung der sog. Schleppmomente beim Starten der kalten bzw. der warmen Brennkraftmaschine 13 bzw. des Nebenaggregateantriebs 22. Das Warmschleppmoment des Nebenaggregateantriebs 22 liegt hier bei etwa 5 Newtonmeter, wogegen das Warmschleppmoment der Brennkraftmaschine 13 bei 50 Newtonmeter liegt.

Zum Start des erfindungsgemäßen Antriebssystemes wird zunächst der Nebenaggregateantrieb 22 dynamisch gestartet, d.h. abhängig von der gemessenen Temperatur des Nebenaggregateantriebs 22 wird dieser mit einem Direktstart oder mit einem Impulsstart durch den Starter-Generator 20 gestartet. Bei warmen Nebenaggregateantrieb 22 wird ein dynamischer Direktstart durchgeführt, indem die Fahrkupplung 15 und die Hilfskupplung 14 geöffnet sowie die Schaltkupplung 21 geschlossen und dann der Starter-Generator 20 im Motorbetrieb eingeschaltet wird. Der kalte Nebenaggregateantrieb 22 wird mit einem dynamischen Impulsstart gestartet, indem die Fahrkupplung 15, die Hilfskupplung 14 und die Schaltkupplung 21 geöffnet und der Starter-Generator 20 im Motorbetrieb eingeschaltet werden. Erst nach einem Hochlaufen des Starter-Generators 20 auf etwa 1000 bis 1500 U/min. wird dann die Schaltkupplung 21 zum Starten des Nebenaggregateantriebs 22 geschlossen. Anschließend kann die kalte Brennkraftmaschine 13 gestartet werden. Hierbei ist ein schneller Impulsstart möglich, in dem die Summe der Antriebsmomente des Nebenaggregateantriebs 22 und des motorisch betriebenen Starter-Generators 20 und der Drehmomente der Schwungmassen des Zwischengetriebes 18 bei geöffneter Fahrkupplung 15 und geschlossener Schaltkupplung 21 mit dem Schließen der Hilfskupplung 14 auf die Brennkraftmaschine 13 des Hauptantriebstranges 10 wirkt und so gestartet wird. Bei warmer Brennkraftmaschine 13 ist ferner ein Impulsstart mit dem Starter-Generator 20 allein möglich, der Nebenaggregateantrieb 22 ist gegebenenfalls dann abgeschaltet und die Schaltkupplung 21 geöffnet.

Das Antriebssystem erlaubt auch einen rein elektrischen Betrieb des Fahrzeugs bei sehr geringem Fahrleistungsbedarf, z.B. beim Rangieren. Hierbei ist nur der Starter-Generator 20 über das Zwischengetriebe 18 und die Fahrkupplung 15 mit der Antriebsachse 17 des Fahrzeugs in Verbindung. Für diesen Betrieb ist jedoch von der elektrischen Steuerung und Versorgung 12 sowohl der Ladezustand der Akkumulatorbatterie 23 als auch der Leistungsbedarf der Nebenaggregate 19 zu überwachen, um notfalls den Nebenaggregateantrieb 22 noch starten zu können.

Die Fahrbereitschaft des Kraftfahrzeuges kann dadurch erhöht werden, daß bereits beim Öffnen der Fahrertür der Nebenaggregateantrieb 22 über den Türkontakt 26 gestartet wird. Ferner ist vorgesehen, zum Vorheizen des Kraftfahrzeugs und des Öls in einem gemeinsamen Ölkreislauf von Brennkraftmaschine 13 und Nebenaggregateantrieb 22 den Nebenaggregateantrieb 22 über die Fernbedienung 24 zu starten, indem der Starter-Generator 20 und die Schaltkupplung 21 über die fernbedienbare elektrische Steuerung und Versorgung 12 ansteuerbar sind.

Die Auswahl der Betriebsart des Kraftfahrzeug-Antriebes zwischen der Brennkraftmaschine 13 als Hauptantrieb, und/oder dem Nebenaggregateantrieb 22 und/oder dem Starter-Generator 20 erfolgt über die elektrische Steuerung und Versorgung 12 in Abhängigkeit vom Leistungsbedarf des Kraftfahrzeugs. In einfachster Weise wird dabei die Auswahl der Betriebsart in Abhängigkeit von der Fahrpedalstellung des Kraftfahrzeugs durch den Gaspedalsensor 25 vorgenommenen. Die elektrische Steuerung und Versorgung 12 enthält das gesamte Fahrzeug- und Batterie-Management zur Steuerung der drei Kupplungen 14, 15 und 21 sowie des Starter-Generators 20. In der nachfolgenden Tabelle sind einige bevorzugte Zustände der Komponenten des erfindungsgemäßen Antriebssystems in Abhängigkeit von der jeweiligen Betriebsart aufgelistet. Dabei können jedoch Abweichungen von diesem Zustandsschema über das Motormanagement abhängig vom Batteriezustand und den geforderten mechanischen und elektrischen Leistungen sehr flexibel erfolgen, ohne die niedrigen Verbrauchswerte zu gefährden.

| Betriebsart | Fahr-Kupplung 15 | Hilfskupplung 14 | Schaltkupplung 21 | Nebenaggregat antrieb 22 | Brennkraftmaschine 13 | Startergenerator 20 |
|---|---|---|---|---|---|---|
| Hohe Teillast bis Voll-Last (Fall 1) | zu | zu | offen | aus | Ein | Generatorisch |
| Niedrig-Last (Fall 2) | zu | Offen | zu | ein | Aus | Nach Bedarf |
| Klimaanlage an, Fahrzeug steht (Fall 3) | offen | offen | zu | ein | Aus | Generato risch |
| Rollen des Fahrzeug, Schub (Fall 4) | zu | offen | offen | aus | aus | Generato risch |
| Ampel-Stop (Fall 5) | offen | offen | zu | ein | aus | Generato risch |
| Ampel-Start (Fall 6) | offen | zu | zu | ein | Ein | Motorisch |

## Patentansprüche

1. Antriebssystem für Kraftfahrzeuge, mit insbesondere einer Brennkraftmaschine (13) als Hauptantrieb, einer Fahrkupplung (15), einem Fahrzeuggetriebe (16) und mindestens einer Antriebsachse (17) im Hauptantriebsstrang (10), ferner mit einem Nebenantriebsstrang (11) und mit Nebenaggregaten (19), die im Nebenantriebsstrang (11) angeordnet sein können, wobei der Nebenantriebsstrang (11) mit dem Hauptantriebsstrang koppelbar ist und mit einer als Starter-Generator (20) arbeitenden elektrischen Maschine, wobei der Nebenantriebsstrang (11) einen eigenen Nebenaggregateantrieb (22) aufweist, der mit dem Starter-Generator (20) koppelbar ist, und wobei der Nebenaggregateantrieb (22) und der Starter-Generator (20) sowohl einzeln als auch gemeinsam mit oder ohne Hauptantrieb (13) zum Antrieb des Kraftfahrzeugs mit dessen Antriebsachse (17) koppelbar ist.

2. Antriebssystem nach Anspruch 1, **dadurch gekennzeichnet, daß** der Hauptantrieb (13) bzw. Nebenaggregateantrieb (22) vom jeweils eingeschalteten Antrieb (13 bzw. 20 bzw. 22) des Kraftfahrzeugs abkoppelbar ist.

3. Antriebssystem nach Anspruch 1 oder 2, **dadurch gekennzeichnet, daß** der Hauptantrieb und der Nebenaggregateantrieb (22) jeweils eine Brennkraftmaschine ist und die Leistung des Nebenaggregateantriebs (22) kleiner als die Hälfte der Leistung der Brennkraftmaschine (13) im Hauptantriebsstrang (10) ist.

4. Antriebssystem nach Anspruch 1, 2 oder 3, **dadurch gekennzeichnet, daß** der Nebenaggregateantrieb (22) zum Starten über eine Schaltkupplung (21) mit dem Starter-Generator (20) gekoppelt ist.

5. Antriebssystem nach Anspruch 4, **dadurch gekennzeichnet, daß** der Hauptantrieb (13) zum Starten mit dem laufenden Nebenaggregateantrieb (22) koppelbar ist.

6. Antriebssystem nach einem der vorherigen Ansprüche, **dadurch gekennzeichnet, daß** der Nebenaggregateantrieb (22) und der Starter-Generator (20) über ein Zwischengetriebe (18) mit dem Hauptantriebsstrang (10) verbunden sind.

7. Antriebssystem nach Anspruch 6, **dadurch gekennzeichnet, daß** das Zwischengetriebe (18) eingangsseitig mit dem Starter-Generator (20) verbunden ist und ausgangsseitig sowohl über die Fahrkupplung (15) vom Fahrzeuggetriebe (16) als auch über eine Hilfskupplung (14) vom Hauptantrieb (13) im Hauptantriebsstrang (10) abkoppelbar ist.

8. Antriebssystem nach Anspruch 7, **dadurch gekennzeichnet, daß** beim Starten des Nebenaggregateantriebs (22) die Fahrkupplung (15) und die Hilfskupplung (14) im Hauptantriebsstrang (10) geöffnet sind.

9. Antriebssystem nach Anspruch 8, **dadurch gekennzeichnet, daß** zum Direktstart des Nebenaggregateantriebs (22) die Fahr- und die Hilfskupplung (15, 14) geöffnet und die Schaltkupplung (21) geschlossen ist.

10. Antriebssystem nach Anspruch 8, **dadurch gekennzeichnet, daß** zum Impulsstart des Nebenaggregateantriebs (22) die Hilfs-, die Fahr- und die Schaltkupplung (14, 15, 21) geöffnet sind und daß die Schaltkupplung (21) erst nach einem Hochlaufen des Starter-Generators (20) zu schließen ist.

11. Antriebssystem nach Anspruch 9 und 10, **dadurch gekennzeichnet, daß** mittels Temperaturerfassung des Nebenaggregateantriebs (22) dessen Startvorgang zwischen Direktstart und Impulsstart temperaturabhängig umsteuerbar ist.

12. Antriebssystem nach Anspruch 7, **dadurch gekennzeichnet, daß** zum Direktstart des Hauptantriebes (13) bei laufendem Nebenaggregateantrieb (22) die Fahrkupplung (15) geöffnet und die Hilfskupplung (14) sowie die Schaltkupplung (21) geschlossen sind.

13. Antriebssystem nach Anspruch 7, **dadurch gekennzeichnet, daß** zum Impulsstart des Hauptantriebs (13) bei laufendem Nebenaggregateantrieb (22) die Fahrkupplung (15) offen, die Schaltkupplung (21) geschlossen und die Hilfskupplung (14) erst nach einem Hochlaufen des Zwischengetriebes (18) zu schließen ist.

14. Antriebssystem nach Anspruch 12 und 13, **dadurch gekennzeichnet, daß** mittels Temperaturerfassung des Hauptantriebes (13) dessen Startvorgang zwischen Direktstart und Impulsstart temperaturabhängig umsteuerbar ist.

15. Antriebssystem nach Anspruch 14, **dadurch gekennzeichnet, daß** sowohl beim Direktstart als auch beim Impulsstart des Hauptantriebs (13) der Starter-Generator (20) im Motorbetrieb mit zugeschaltet ist.

16. Antriebssystem nach Anspruch 7, **dadurch gekennzeichnet, daß** der Starter-Generator (20) und die Schaltkupplung (21) zum Starten des Nebenaggregateantriebs (22) über eine fernbedienbare elektrische Steuerung und Versorgung 12 ansteuerbar sind.

17. Antriebssystem nach Anspruch 7, **dadurch gekennzeichnet, daß** der Starter-Generator (20) und die Schaltkupplung (21) zum Starten des Nebenaggregateantriebs (22) beim Öffnen der Fahrertür über einen Türkontakt (26) ansteuerbar ist.

18. Antriebssystem nach einem der vorherigen Ansprüche, **dadurch gekennzeichnet, daß** bei sehr geringem Fahrleistungsbedarf und ausreichender Batterieladung mittels der elektrischen Steuerung und Versorgung (12) nur der Starter-Generator (20) zum Kraftfahrzeugantrieb verwendet ist.

19. Antriebssystem nach einem der vorherigen Ansprüche, **dadurch gekennzeichnet, daß** bei geringem Fahrleistungsbedarf nur der Nebenaggregateantrieb (22) zum Kraftfahrzeugantrieb verwendet ist.

20. Antriebssystem nach einem der vorherigen Ansprüche, **dadurch gekennzeichnet, daß** bei hohem Fahrleistungsbedarf Nebenaggregateantrieb (22) und Hauptantrieb (13) gemeinsam zum Kraftfahrzeugantrieb verwendet sind.

21. Antriebssystem nach einem der vorherigen Ansprüche, **dadurch gekennzeichnet, daß** bei kurzzeitigem Höchstfahrleistungsbedarf sowohl Nebenaggregateantrieb (22) und Hauptantrieb (13) als auch der Starter-Generator (20) im Motorbetrieb zum Kraftfahrzeugantrieb verwendet sind.

22. Antriebssytem nach einem der Ansprüche 18 bis 21, **dadurch gekennzeichnet, daß** die Auswahl der Betriebsart des Kraftfahrzeugantriebes zwischen Hauptantrieb (13) und/oder Nebenaggregateantrieb (22) und/oder Starter-Generator (20) über eine elektrische Steuerung und Versorgung (12) erfolgt.

23. Antriebssystem nach Anspruch 22, **dadurch gekennzeichnet, daß** die Auswahl der Betriebsart in Abhängigkeit von der Stellung des Gaspedals des Kraftfahrzeuges erfolgt, die über einen Gaspedalsensor (25) erfaßt ist.

24. Antriebssystem nach einem der vorhergehenden Ansprüche, daß die Nebenaggregate (19) entweder mechanisch durch den Nebenantriebsstrang (11) oder elektrisch antreibbar sind.

## Claims

1. Drive system for motor vehicles, having in particular an internal combustion engine (13) as main drive, a driving clutch (15), a vehicle gearbox (16) and at least one drive axle (17) in the main drive train (10), in addition having a secondary drive train (11) and having secondary assemblies (19) which can be arranged in the secondary drive train (11), it being possible to couple the secondary drive train (11) to the main drive train and to an electric machine which operates as a starter-generator (20), the secondary drive train (11) having its own secondary assembly drive (22) which can be coupled to the starter-generator (20), and it being possible to couple the secondary assembly drive (22) and the starter-generator (20) either individually or jointly with or without a main drive (13) in order to drive the motor vehicle with its drive axle (17).

2. Drive system according to Claim 1, **characterized in that** the main drive (13) and the secondary assembly drive (22) can be decoupled from the respectively activated drive (13 or 20 or 22) of the motor vehicle.,

3. Drive system according to Claim 1 or 2, **characterized in that** the main drive and the secondary assembly drive (22) are each an internal combustion engine, and the power of the secondary assembly drive (22) is smaller than half the power of the internal combustion engine (13) in the main drive train (10).

4. Drive system according to Claim 1, 2 or 3, **characterized in that** the secondary assembly drive (22) is coupled to the starter-generator (20) via a shift clutch (21) for the purpose of starting.

5. Drive system according to Claim 4, **characterized in that** the main drive (13) can be coupled to the running secondary assembly drive (22) for the purpose of starting.

6. Drive system according to one of the preceding claims, **characterized in that** the secondary assembly drive (22) and the starter-generator (20) are connected to the main drive train (10) via an intermediate gearbox (18).

7. Drive system according to Claim 6, **characterized in that** the intermediate gearbox (18) is connected at the input end to the starter-generator (20), and can be decoupled at the output end both from the vehicle gearbox (16) via the driving clutch (15) and from the main drive (13) in the main drive train (10) via an auxiliary clutch (14).

8. Drive system according to Claim 7, **characterized in that**, when the secondary assembly drive (22) starts, the driving clutch (15) and the auxiliary clutch (14) in the main drive train (10) are opened.

9. Drive system according to Claim 8, **characterized in that**, in order to start the secondary auxiliary drive (22) directly, the driving clutch (15) and the auxiliary clutch (14) are opened and the shift clutch (21) is closed.

10. Drive system according to Claim 8, **characterized in that**, for pulsed starting of the secondary assembly drive (22), the auxiliary clutch, the driving clutch and the shift clutch (14, 15, 21) are opened, and **in that** the shift clutch (21) is not to be closed until after the starter-generator (20) has accelerated.

11. Drive system according to Claims 9 and 10, **characterized in that**, by registering the temperature of the secondary assembly drive (22), its starting process can be switched over between direct starting and pulsed starting as a function of temperature.

12. Drive system according to Claim 7, **characterized in that**, for directly starting the main drive (13) when the secondary assembly drive (22) is running, the driving clutch (15) is opened and the auxiliary clutch (14) and the shift clutch (21) are closed.

13. Drive system according to Claim 7, **characterized in that**, for pulsed starting of the main drive (13) when the secondary assembly drive (22) is running, the driving clutch (15) is open, the shift clutch (21) is closed and the auxiliary clutch (14) is not to be closed until after the intermediate gearbox (18) has accelerated.

14. Drive system according to Claims 12 and 13, **characterized in that**, by registering the temperature of the main drive (13), its starting process can be switched over between direct starting and pulsed starting as a function of temperature.

15. Drive system according to Claim 14, **characterized in that** the starter-generator (20) is also connected when operating the engine, both in the case of direct starting and pulsed starting of the main drive (13).

16. Drive system according to Claim 7, **characterized in that** the starter-generator (20) and the shift clutch (21) can be actuated so as to start the secondary assembly drive (22) by means of a remote-controlled electric control and supply system (12).

17. Drive system according to Claim 7, **characterized in that** the starter-generator (20) and the shift clutch (21) can be actuated so as to start the secondary assembly drive (22) by means of a door contact (26) when the driver's door opens.

18. Drive system according to one of the preceding claims, **characterized in that**, when there is very low driving power demand and sufficient battery charge, only the starter-generator (20) is used for driving the motor vehicle by means of the electric control and power supply system (12).

19. Drive system according to one of the preceding claims, **characterized in that**, when there is a low driving power demand, only the secondary assembly drive (22) is used to drive the motor vehicle.

20. Drive system according to one of the preceding claims, **characterized in that**, when there is a high driving power demand, the secondary assembly drive (22) and main drive (13) are used together to drive the motor vehicle.

21. Drive system according to one of the preceding claims, **characterized in that**, when there is a brief maximum driving power demand, the secondary assembly drive (22), main drive (13) and the starter-generator (20) are used in operating the engine in order to drive the motor vehicle.

22. Drive system according to one of Claims 18 to 21, **characterized in that** the selection of the operating mode of the motor vehicle drive between the main drive (13) and/or secondary assembly drive (22) and/or starter-generator (20) is carried out by means of an electric control and power supply system (12).

23. Drive system according to Claim 22, **characterized in that** the selection of the operating mode is carried out as a function of the position of the acceleration pedal of the motor vehicle, which position is sensed by means of an accelerator pedal sensor (25).

24. Drive system according to one of the preceding claims, **characterized in that** the secondary assemblies (19) can be driven either mechanically by means of the secondary drive train (11) or electrically.

## Revendications

1. Système d'entraînement pour véhicule automobile comportant notamment un moteur à combustion interne (13) comme moyen d'entraînement principal, un embrayage de déplacement (15), une boîte de vitesse (16) et au moins un essieu moteur (17) dans la ligne de transmission principale (10) ainsi qu'une ligne de transmission auxiliaire (11) avec des équipements (19) qui peuvent être installés dans la ligne de transmission auxiliaire (11), la ligne de transmission auxiliaire (11) pouvant être couplée à la ligne de transmission principale et à un moteur électrique fonctionnant comme démarreur-générateur (20),
dans lequel la ligne d'entraînement auxiliaire (11) a un entraînement auxiliaire (22), propre, qui peut être couplé au générateur-démarreur (20), et
l'entraînement des équipements auxiliaires (22) et le générateur - démarreur (20) peuvent soit séparément soit globalement avec, ou sans l'entraînement principal (13) être couplés avec son essieu moteur (17) pour entraîner le véhicule.

2. Système d'entraînement selon la revendication 1,
**caractérisé en ce que**
l'entraînement principal (13) ou l'entraînement auxiliaire (22) peut être découplé de chaque entraînement couplé (13 ou 20 ou 22) du véhicule.

3. Système d'entraînement selon les revendications 1 ou 2,
**caractérisé en ce que**
l'entraînement principal et l'entraînement auxiliaire (22) chaque fois constitués par un moteur à combustion interne, et la puissance de l'entraînement auxiliaire (22) est inférieure à la moitié de la puissance du moteur à combustion interne (13) dans la ligne de transmission principale (10).

4. Système d'entraînement selon les revendications 1, 2 ou 3,
**caractérisé en ce que**
l'entraînement auxiliaire (22) est couplé au démarrage au générateur - démarreur (20) par un embrayage à commutation (21).

5. Système d'entraînement selon la revendication 4,
**caractérisé en ce que**
l'entraînement principal (13) est couplé au démarrage à l'entraînement auxiliaire (22) en marche.

6. Système d'entraînement selon l'une quelconque des revendications précédentes,
**caractérisé en ce que**
l'entraînement auxiliaire (22) et le générateur - démarreur (20) sont reliés à la ligne de transmission principale (10) par une transmission intermédiaire (18).

7. Système d'entraînement selon la revendication 6,
**caractérisé en ce que**
l'entrée de la transmission intermédiaire (18) est reliée au générateur - démarreur (20) et sa sortie dans la ligne de transmission principale (10) est désaccouplée à la fois par l'embrayage de déplacement (15) de la boîte de vitesse (16) et par un embrayage auxiliaire (14) de l'entraînement principal (13).

8. Système d'entraînement selon la revendication 7,
**caractérisé en ce qu'**
au démarrage de l'entraînement auxiliaire (22), l'embrayage de déplacement (15) et l'embrayage auxiliaire (14) sont ouverts dans la ligne de transmission principale (10).

9. Système d'entraînement selon la revendication 8,
**caractérisé en ce que**
pour le démarrage direct de l'entraînement auxiliaire (22), l'embrayage de déplacement et l'embrayage auxiliaire (15, 14) sont ouverts et l'embrayage de commutation (21) est fermé.

10. Système selon la revendication 8,
**caractérisé en ce que**
pour le démarrage impulsionnel de l'entraînement auxiliaire (22), l'embrayage auxiliaire, l'embrayage de déplacement et l'embrayage de commutation (14, 15, 21) sont ouverts et l'embrayage de commutation (21) n'est fermé qu'après la montée en régime du générateur-démarreur (20).

11. Système d'entraînement selon les revendications 9 et 10,
**caractérisé en ce qu'**
on commute l'opération de démarrage entre le démarrage direct et le démarrage impulsionnel en fonction de la température par saisie de la température de l'entraînement auxiliaire (22).

12. Système d'entraînement selon la revendication 7,
**caractérisé en ce que**
pour le démarrage direct de l'entraînement principal (13), l'entraînement auxiliaire (22) fonctionnant, on ouvre l'embrayage de déplacement (15) et on ferme l'embrayage auxiliaire (14) et l'embrayage de commutation (21).

13. Système d'entraînement selon la revendication 7,
**caractérisé en ce que**
pour le démarrage impulsionnel de l'entraînement principal (13), l'entraînement auxiliaire (22) tournant, l'embrayage de déplacement (15) est ouvert, l'embrayage de commutation (22) est fermé, et l'embrayage auxiliaire (14) est fermé seulement après la montée en régime de la transmission intermédiaire (18).

14. Système d'entraînement selon les revendications 12 et 13,
**caractérisé en ce qu'**
on commute l'opération de démarrage de l'entraînement principal (13) entre le démarrage direct et le démarrage impulsionnel en fonction de la température par saisie de la température de l'entraînement principal (13).

15. Système d'entraînement selon la revendication 14,
**caractérisé en ce qu'**
à la fois pour le démarrage direct et pour le démarrage impulsionnel de l'entraînement principal (13), le générateur-démarreur (20) fonctionne comme moteur.

16. Système d'entraînement selon la revendication 7,
**caractérisé en ce que**
le générateur-démarreur (20) et l'embrayage de commutation (21) sont commandés par une télécommande électrique et une alimentation (12) pour démarrer l'entraînement auxiliaire (22).

17. Système d'entraînement selon la revendication 7,
**caractérisé en ce que**
le générateur-démarreur (20) et l'embrayage de commutation (21) sont commandés par un contact de porte (26) lors de l'ouverture de la porte du véhicule pour démarrer l'entraînement auxiliaire (22).

18. Système d'entraînement selon l'une des revendications précédentes,
**caractérisé en ce que**
pour une demande de puissance de déplacement très faible et une charge de batterie suffisante, la commande électrique et l'alimentation (12) utilisent seulement le générateur-démarreur (20) pour entraîner le véhicule.

19. Système d'entraînement selon l'une des revendications précédentes,
**caractérisé en ce que**
pour une faible demande de puissance de déplacement, seul l'entraînement auxiliaire (22) est utilisé pour entraîner le véhicule.

20. Système d'entraînement selon l'une des revendications précédentes,
**caractérisé en ce que**
pour une demande de puissance de déplacement élevée, l'entraînement auxiliaire (22) et l'entraînement principal (13) sont utilisés en commun pour l'entraînement du véhicule.

21. Système d'entraînement selon l'une des revendications précédentes,
**caractérisé en ce que**
pour une demande de puissance de déplacement, extrêmement élevée, de courte durée, l'entraînement auxiliaire (22) et l'entraînement principal (13) ainsi que le générateur-démarreur (20) en mode moteur sont utilisés pour l'entraînement du véhicule.

22. Système d'entraînement selon l'une des revendications 18 à 21,
**caractérisé en ce que**
la sélection du mode de fonctionnement de l'entraînement du véhicule, entre l'entraînement principal (13) et/ou l'entraînement auxiliaire (22) et/ou le générateur-démarreur (20) se fait par une commande électrique et une alimentation (12).

23. Système d'entraînement selon la revendication 22,
**caractérisé en ce que**
la sélection du mode de fonctionnement se fait suivant la position de la pédale d'accélérateur du véhicule, position détectée par un capteur de pédale d'accélérateur (25).

24. Système d'entraînement selon l'une des revendications précédentes,
**caractérisé en ce que**
les accessoires (19) sont entraînés soit mécaniquement par l'intermédiaire de la ligne de transmission auxiliaire (11) soit par un entraînement électrique.
